# EUROPÄISCHE PATENTSCHRIFT

(11) **EP 2 720 847 B1**
(45) Veröffentlichungstag und Bekanntmachung des Hinweises auf die Patenterteilung: **20.05.2015**
(21) Anmeldenummer: 12723854.1
(22) Anmeldetag: 21.05.2012
(51) Int. Cl.: B29C 45/17

(54) **FÜHRUNGSSCHUH FÜR EINE FÜHRUNGSVORRICHTUNG EINER SCHLIESSEINHEIT EINER KUNSTSTOFFVERARBEITUNGSMASCHINE**
GUIDE SHOE FOR A GUIDING DEVICE OF A PLASTIC PROCESSING MACHINE CLAMPING UNIT
SABOT DE GUIDAGE DESTINE A UN DISPOSITIF DE GUIDAGE D'UNE UNITE DE VERROUILLAGE D'UNE MACHINE DE TRANSFORMATION DE MATIERES PLASTIQUES

(30) Priorität: 18.06.2011 DE 102011104535
(43) Veröffentlichungstag der Anmeldung: 23.04.2014
(73) Patentinhaber: KraussMaffei Technologies GmbH, 80997 München (DE)
(72) Erfinder: AMMER, Daniel, 81735 München (DE); PIHAN, Volker, 82327 Tutzing (DE); KRABICHLER, Georg, 85276 Pfaffenhofen (DE)
(74) Vertreter: Wilhelm, Ludwig
(86) Internationale Anmeldenummer: PCT/EP2012/059382
(87) Internationale Veröffentlichungsnummer: WO 2012/175261

(56) Entgegenhaltungen:
- WO-A1-02/30650
- JP-A- 2003 071 894
- JP-A- 2009 262 514

## Beschreibung

Die Erfindung betrifft einen Führungsschuh für eine Führungsvorrichtung einer Schließeinheit einer Kunststoffverarbeitungsmaschine, insbesondere für eine Schließeinheit einer Zweiplatten-Spritzgießmaschine mit Zugsäulen. Die Erfindung wird im Folgenden exemplarisch anhand einer Spritzgießmaschine beschrieben. Sie ist jedoch nicht darauf beschränkt und kann auf andere Kunststoffverarbeitungsmaschinen übertragen werden, die eine linear geführte Schließeinheit aufweisen.

Bei Spritzgießmaschinen werden die beiden Formhälften eines Spritzgießwerkzeuges jeweils über eine feste Formaufspannplatte und über eine bewegliche Formaufspannplatte aufgenommen, die während des Spritzgießzyklus aufeinander zu- oder voneinander wegbewegt werden. Dabei ist die feste Formaufspannplatte ortsfest an der Spritzgießmaschine befestigt. Über die bewegliche Formaufspannplatte wird das Öffnen und Schließen des Formwerkzeuges bewerkstelligt. Die Bewegungsrichtung der beweglichen Formaufspannplatte wird daher als Schließrichtung der Spritzgießmaschine bezeichnet und verläuft in Längsrichtung derselben. Sie wird oft auch als X-Richtung oder als X-Achse der Spritzgießmaschine und des Spritzguss-Bauteils definiert, da sie ebenfalls die (Haupt-)Entformungsrichtung für den Spritzgießprozess darstellt. Horizontal quer zur Schließrichtung verläuft entsprechend die Y-Achse, sodass die Hochachse der Spritzgießmaschine die Z-Achse darstellt.

Das Schließen des Formwerkzeuges und das Aufbringen der Schließkräfte für das Formwerkzeug geschieht bei modernen Spritzgießmaschinen über Zugsäulen, die die Aufgabe haben, die sehr hohen Kräfte zum Schließen des Werkzeuges auf das Formwerkzeug zu übertragen.

Bei modernen Spritzgießmaschinen haben die Zugsäulen keine Führungsfunktion für die Formaufspannplatten und sie sind "lediglich" dafür zuständig, die Schließkräfte aufzubringen. Zur Führung der beweglichen Formaufspannplatte sind üblicherweise Führungsvorrichtungen vorgesehen, an die hohe Anforderungen hinsichtlich Genauigkeit der Führung und Belastbarkeit gestellt sind.

Für eine kurze Zykluszeit des Spritzgießprozesses ist es wichtig, die bewegliche Formaufspannpl,atte mit möglichst hoher Geschwindigkeit zwischen der geöffneten und der geschlossen Positionen des Spritzgießwerkzeuges in X-Richtung hin und her verfahren zu können. Hierfür wird die bewegliche Werkzeugaufspannplatte herkömmlich über Führungsschienen, welche vom Linearantrieb abgekoppelt sind, in Schließrichtung geführt. An die Führungsschienen bzw. an die Führungsschuhe, welche auf den Führungsschienen gleiten, werden diesbezüglich hohe Anforderungen an die Leichtgängigkeit und Steifigkeit gestellt, damit die bewegliche Formhälfte auf der beweglichen Werkzeugaufspannplatte bzw. auf der Formaufspannplatte mit höchster Präzision und hohen Geschwindigkeiten sowie mit hohen Beschleunigungen parallel geführt werden kann. Hierzu ist neben einer niedrigen Reibung der Gleit- oder Wälzelemente der Führungsschuhe auf der Führungsschiene auch eine hohe Steifigkeit der Führungsschuhe gegen Biegung/Kippung um die Y-Achse und in Z-Richtung erforderlich, wobei bewegte Massen minimal sein sollen.

Die hohen Beschleunigungswerte werden vor allem beim Übergang aus der offenen Stellung des Werkzeugs in den Eilgang zum Annähern der beiden Formhälften und beim Abbremsen vom Eilgang in die eigentliche Schließbewegung und bei den entsprechenden umgekehrten Bewegungsabläufen erreicht.

Kurz vor Erreichen der geschlossenen Stellung wird die bewegliche Formhälfte abgebremst, damit ein Versatz, der gegebenenfalls zwischen den beiden Formhälften vorhanden ist, durch geeignete Ausgleichsmittel im nicht Eilgang kompensiert werden muss. Gerade dieses Abbremsen verursacht hohe Kippmomente der beweglichen Formaufspannplatte um die Y-Achse gegenüber den Führungen, die durch steife Führungsschuhe aufgenommen werden können. Diese weisen hierzu üblicherweise eine in X-Richtung langgestreckte Form auf.

Bei einer Kompensierung von eventuell vorhandenen minimalen Versätzen zwischen den beiden Formhälften in Y- oder/und in Z-Richtung kommt es zu Verspannungen in den Formaufspannplatten, welche im Fall der bewegliche Formaufspannplatte auf die Führungseinrichtungen übertragen werden, wenn keine Kompensationsmöglichkeit hierfür vorgesehen ist.

Nach Erreichen der geschlossenen Stellung, also noch bevor die Form befüllt wird, wird auf die beiden Formaufspannplatten die Schließkraft aufgebracht, damit durch das Befüllen der Form die beiden Formhälften nicht auseinandergedrückt werden. Hierbei werden die Formaufspannplatten unter Einwirkung der Schließkraft minimal verformt. Am stärksten wirkt sich die Verformung auf die Randbereiche der Platte aus.

Die oben angesprochene Verformung der Formaufspannplatten resultiert zum einen aus der aufgebrachten Schließkraft und anteilig auch aus dem aufgebrachten Spritzdruck beim Einspritzen der plastifizierten Kunststoffmasse.

Im Folgenden ist also unter einer Verformung der Formaufspannplatten eine minimale (im hundertstel und zehntel Millimeterbereich liegende) elastische Verformung durch Aufbringen der Schließkraft und/oder des Einspritzdruckes zu verstehen.

Durch Einbringen der Kunststoffmasse mit Spritzdruck zum Befüllen der Form werden die beiden Formaufspannplatten durch den hierzu notwendigen hohen Spritzdruck minimal verformt. Spritzdrücke von 1000 bar und mehr sind hierbei durchaus üblich. Die dabei auftretende ballige Verformung des Formwerkzeuges wird an die Formaufspannplatten weitergeleitet, wobei diese Verformungen, insbesondere an der beweglichen Formaufspannplatte herkömmlich, d.h. im Stand der Technik, auf die Führungselemente, d.h. auf die Führungsschuhe und größtenteils auch auf die Führungsschienen übertragen werden. Allerdings sollen gemäß herkömmlichem Stand der Technik Verformungen an den Führungselementen vermieden werden, damit eine gute Linearführung erreicht wird. Dies hat zur Folge, dass die Führungselemente dementsprechend steif und robust und daher meist sehr massiv ausgebildet werden, damit die Verformungen an der beweglichen Werkzeugaufspannplatte und den Führungselementen klein gehalten werden, um so Schäden an den Führungselementen, insbesondere an den Führungsschienen, zu vermeiden.

Nur eine möglichst exakte Parallelität der beiden Formaufspannplatten und damit der beiden Formhälften kann eine optimale Teilequalität, eine hohe Teilezahl bei kurzen Zykluszeiten gewährleisten. Darüber hinaus können nur dann hohe Standzeiten des Spritzgießwerkzeuges und auch der Spritzgießmaschine erreicht werden, wenn die beiden Formhälften genau parallel zueinander gehalten werden. Je besser die Parallelität der Formaufspannplatten eingehalten werden kann, desto niedriger sind Werkzeugverschleiß und damit einhergehende Beschädigungen am Werkzeug und an den Führungselementen.

Den Führungselementen für bewegliche Formaufspannplatten, welche üblicherweise in Z-Richtung unterhalb der beweglichen Formaufspannplatte angeordnet sind und pro Seite an der Spritzgussmaschine je einmal vorhanden sind, kommt also eine hohe Bedeutung zu. Sie müssen eine hohe Verfahrgeschwindigkeit der beweglichen Formaufspannplatte gewährleisten und gleichzeitig hohe Kippmomente beim Beschleunigen bzw. Abbremsen der Formhälfte aufnehmen können. Ferner müssen sie Verspannungen, die bei Annäherung der beiden Formhälften kurz vor und in der Geschlossenstellung aufgrund von kleinen Versätzen der beiden Formhälften entstehen können, aufnehmen. Des Weiteren müssen die Führungsvorrichtungen Verformungen der beweglichen Aufspannplatte aufnehmen können, die entstehen wenn Schließkraft aufgebaut und das Formwerkzeug mit Spritzdruck beaufschlagt wird. All diese Belastungen sollen von den Führungselementen so aufgenommen werden, dass eine Beschädigung, insbesondere der Gleit-/Wälzelemente und/oder der Führungsschiene, vermieden wird.

Aus DE 41 41 259 A1 ist eine Formschließeinrichtung bekannt, welche kleine Versätze zwischen den Formhälften in Schließstellung als auch quer zur Schließrichtung sowie in Höhenrichtung, d.h. in vertikaler Richtung, durch eine begrenzte Verschiebbarkeit der beweglichen Formaufspannplatte ausgleichen kann.

Hierbei ist die bewegliche Werkzeugaufspannplatte derart schwimmend auf einem Maschinenschlitten gelagert, dass die bewegliche Formaufspannplatte eine geringe Bewegungsfreiheit in Längsrichtung der Spritzgussmaschine bzw. in Höhenrichtung der Spritzgussmaschine aufweist. Ein Ausgleich in Querrichtung erfolgt durch Verformung von Druckbolzen, die die bewegliche Aufspannplatte in Z-Richtung abstützen. Durch diese Anordnung werden Verspannungen beim Schließen der beiden Formhälften vermieden, da die beiden Formhälften durch die schwimmende Lagerung der beweglichen Formhälfte nahezu parallel aufeinander zu bewegt werden.

Jedoch ist ein Ausgleich bzw. eine Kompensierung der Verspannungen, die unter Schließkraft und beim Füllen der Form durch den Spritzdruck entstehen, mit der Vorrichtung gemäß DE 41 41 259 A1 nicht möglich.

In DE 44 03 079 C1 wird eine eventuelle Schiefstellung um die Y-Achse der beweglichen Werkzeugaufspannplatte durch einen Ausgleichsmechanismus im Maschinenschlitten ausgeglichen. Hierzu weist der Maschinenschlitten pendelnd gelagerte Führungsrollen auf, welche die Schiefstellung ausgleichen.

Auch bei dieser Ausgleichsmöglichkeit ist eine Kompensierung der Spannung, welche durch Schließkraft und beim Befüllen der Form durch den Spritzdruck entstehen, nicht möglich. Ferner sieht diese Vorrichtung keinen Ausgleich für Versätze in Y- und /oder Z-Richtung vor.

Zum Kompensieren der Verformungen der beweglichen Werkzeugaufspannplatte beim Einleiten des Spritzdrucks auf das geschlossene Formwerkzeug schlägt DE 196 08 135 A1 vor, vorzugsweise die bewegliche Werkzeugaufspannplatte aus einem dünnen Aufspannteil und einem dickeren Kraftübertragungsteil auszugestalten, damit Verformungen, welche durch den Spritzdruck hervorgerufen werden, durch die dünnere Schicht der Werkzeugaufspannplatte aufgefangen werden. Dabei verformt sich die dünnere Schicht der Werkzeugaufspannplatte, welche durch Druckelemente entkoppelt mit der dickeren Kraftübertragungsschicht der beweglichen Werkzeugaufspannplatte verbunden ist. Diese aufwendige Ausgestaltung der beweglichen Formaufspannplatte hat nicht nur hohe Herstellkosten für die Spritzgussmaschine zur Folge, sondern bedingt darüber hinaus eine massive und teure Ausgestaltung der beweglichen Formaufspannplatte, wodurch hohe Beschleunigungs- bzw. Verzögerungskräfte notwendig sind.

Dies wiederum führt - will man keine Zykluszeitverlängerung in Kauf nehmen - zu wesentlich größeren und stärkeren Antriebsaggregaten, welche die Kosten der Spritzgussmaschine zusätzlich erhöhen und die Energiebilanz verschlechtern.

Aus der WO 02/30650 A1 ist ein gattungsgemäßer Führungsschuh bekannt.

Aus der JP 2009 262514 A1 ist ein schlittenartiger Führungsschuh mit einer momententkoppelten Aufnahme einer beweglichen Werkzeugaufspannplatte bekannt.

Es ist Aufgabe der Erfindung, eine alternative Ausgestaltung eines gattungsgemäßen Führungsschuhs vorzuschlagen, der Kippbewegungen vermeidet.

Aufgabe der Erfindung ist es weiterhin, eine Führungsvorrichtung für eine Schließeinheit für eine Spritzgießmaschine bereitzustellen, welche das Kippen der beweglichen Formaufspannplatte während der Bewegung der beweglichen Formhälfte bzw. bei deren Beschleunigung oder Abbremsen zuverlässig verhindert und eine hohe Formplattenparallelität während des Formschließvorganges der festen und der beweglichen Formaufspannplatte gewährleistet sowie Verformungen des Spritzgusswerkzeuges, die durch Einleiten der Schließkraft und des Spritzdruckes entstehen, nicht oder nur im minimalen Umfang auf das Führungssystem überträgt. Gleichzeitig soll die Führungseinheit kostengünstig in der Herstellung sein und die bewegten Massen zur Vermeidung einer erhöhten Zykluszeit minimal gehalten werden.

Weiterhin ist Aufgabe der Erfindung eine Führungseinrichtung bereitzustellen, die im Falle einer Beschädigung leicht zugänglich ist, d.h. leicht zu warten ist und ggf. leicht ausgetauscht werden kann.

Die Aufgabe wird mit einem Führungsschuh einer Führungsvorrichtung für eine Führung einer Schließvorrichtung einer kunststoffverarbeitenden Maschine gemäß Anspruch 1 gelöst. Vorteilhafte Ausführungsformen des erfindungsgemäßen Führungsschuhs werden in den Unteransprüchen angegeben.

Der erfindungsgemäße Führungsschuh besteht im Wesentlichen aus zwei Hauptbestandteilen, einem Grundkörper zur Aufnahme von Gleit- bzw. Wälzelementen und einem als Verformungselement ausgebildeten Anbindungselement mit einem Verbindungsbereich der den Grundkörper mit dem Anbindungselement verbindet, welches die mechanischen Verformungen und Verschiebungen der beweglichen Formaufspannplatte aufnehmen kann.

Zur Vermeidung von Kippbewegungen der beweglichen Formaufspannplatte während der Bewegung der Platte, insbesondere während des Beschleunigens bzw. Abbremsens der werkzeugaufspannplatte, ist der Führungsschuh langgestreckt ausgebildet, wodurch ein großer Hebel gegen Kippmomente um die Y-Achse bereitgestellt wird. Dabei ist vorgesehen, dass der Führungsschuh in seinen Endbereichen auf der Unterseite, d.h. auf der Seite, die der Führungsschiene der Spritzgussmaschine zugewandt ist, Gleitelemente aufnehmen kann, die wiederum Kräfte zumindest in vertikaler Richtung aufnehmen können. Die hierbei verwendeten Gleitelemente oder auch Wälzelemente sind dabei nicht Teil der Erfindung. In der einfachsten Ausgestaltung kann jeweils am vorderen Ende bzw. am hinteren Ende des Führungsschuhs an der Unterseite des Grundkörpers des Führungsschuhs jeweils ein Gleitelement angebracht werden, womit durch den langen Abstand zwischen den Gleitelementen ebenfalls eine gute Linearführung gewährleistet ist. Aufgrund der hohen aufzunehmenden Gewichtskräfte sind bei Zweiplattenspritzgussmaschinen auch Wälzrollen anstelle von Gleitelementen üblich.

Vom Erfindungsgedanken ist ebenfalls umfasst, mehr als zwei Gleit-/ bzw. Wälzelemente an der Unterseite des Führungsschuhs vorzusehen. Für den Erfindungsgedanken ist es unerheblich, ob die Gleit-/ Wälzelemente Kräfte nur in vertikaler Richtung oder auch in horizontaler Richtung übertragen können. Üblicherweise wird man Gleitvorrichtungen vorsehen, welche auf Führungsschienen laufen, die sowohl horizontal (Y-Achse) als auch vertikal (z-Achse) belastet werden können.

Rein zur vereinfachten Darstellung des erfindungsgemäßen Führungsschuhs wird beispielhaft eine Horizontalführung an einer Spritzgießmaschine beschrieben. Für den Fachmann ist dieses Anwendungsbeispiel jedoch ohne weiteres auf andere kunststoffverarbeitenden Maschinen, insbesondere Vertikalmaschinen, übertragbar.

In dem dargestellten Anwendungsbeispiel ist die bestimmungsgemäße Lage des Führungsschuhs die, in der der Grundkörper mit seiner Längsrichtung in X-Richtung der Maschine ausgerichtet ist und seine Breitenausdehnung sich in Y-Richtung erstreckt. Konsequenterweise entspricht die Dickenrichtung des Grundkörpers des Führungsschuhs der Z-Richtung der Maschine. Somit sind die an der Unterseite des Grundkörpers anordbaren Gleit-/ Wälzelemente in Z-Richtung am unteren Ende des Führungsschuhs angebracht. Die Endbereiche des Grundkörpers sind daher dessen Endbereiche in X-Richtung der kunststoffverarbeitenden Maschine.

Aufgrund der langgestreckten Ausbildung des Führungsschuhs bzw. des Grundkörpers des Führungsschuhs in X-Richtung ist eine hohe Parallelität zwischen der festen und der beweglichen Formaufspannplatte gewährleistet. Ein Höhenversatz zwischen den beiden Formhälften kann durch die Führungsschuhe bzw. durch den Grundkörper ausgeglichen werden, da dieser in Z-Richtung nur nach unten in seiner Bewegungsfreiheit limitiert ist. In der Regel wird der Führungsschuh mit den daran befestigten Gleit-/ Wälzelementen lediglich auf der entsprechenden Führungsbahn aufliegen, ähnlich einem Wagon auf einer Eisenbahnschiene, wobei in den allermeisten Fällen gleichzeitig eine Führung in Y-Richtung der Maschine vorgesehen ist. Somit kann ein erfindungsgemäßer Führungsschuh bzw. ein Verbund aus mehreren Führungsschuhen, auch als Führungsschlitten bezeichnet werden. Die zugehörige Führungsbahn wird dementsprechend auch als Führungsschiene bezeichnet.

Ebenso sind aber auch alle gängigen Linearschienenführungen an dieser Stelle denkbar, welche auch eine Kräfteaufnahme entgegen der Schwerkraftrichtung (neg. Z-Richtung) erlauben.

Auf der Oberseite des Grundkörpers, also auf der der Führungsschiene abgewandten Seite des Grundköpers, ist bei bestimmungsgemäßer Verwendung der erfindungsgemäßen Führungsvorrichtung ein in Z-Richtung nach oben gerichtetes vertikales als Verformungselement ausgebildetes Anbindungselement vorgesehen. Dieses vertikale Verformungselement, welches insbesondere eine rippenartige bzw. wangenartige Form zeigt, weist in einem oberen Bereich einen beispielsweise bzgl. der Längsrichtung des Führungsschuhes in etwa mittig angeordneten Befestigungsbereich auf, mit dem der erfindungsgemäße Führungsschuh mit der beweglichen Formaufspannplatte verbunden werden kann. Der erfindungsgemäße Führungsschuh ist dabei ausschließlich mit dem Befestigungsbereich mit der beweglichen Formaufspannplatte verbunden. Das Verformungselement erstreckt sich bevorzugt über nahezu die gesamte Länge des Grundkörpers und ist bezüglich der beweglichen Formaufspannplatte senkrecht ausgerichtet, neben dieser angeordnet und nur in einem bzgl. der Längserstreckung des Verformungselements in etwa mittigen Bereich mit der beweglichen Formaufspannplatte verbunden.

Die über den Befestigungsbereich hinausragenden Bereiche des Verformungselements sind vorzugsweise brückenartig ausgebildet und weisen jeweils einen Endbereich auf. Die Endbereiche des Verformungselementes sind mit den Endbereichen des Grundkörpers verbunden. Dabei ist die Verbindung der jeweiligen Endbereiche verwindungssteif, jedoch biegeelastisch bezüglich einer zur X-Achse parallelen Biegeachse, welche sich im Verbindungsbereich zwischen Grundkörper und Verformungselement längs des Grundkörpers erstreckt. Über die Endbereiche können hohe Kräfte in vertikaler Richtung von der beweglichen Werkzeugaufspannplatte auf die Gleitelemente bzw. auf die Führungsschiene der Maschine übertragen werden.

Im Sinne der Erfindung wird eine Verformung um die Längsachse der Führungsbahn, d.h. um eine zur X-Richtung parallele Achse als Biegung bezeichnet und eine Verformung um eine zur Hochachse (Z-Achse) der Maschine parallele Achse als Verwindung bzw. Torsion angesehen.

Eine Verdrehung der Endbereiche um eine Querachse der Kunststoffverarbeitungsmaschine (Y-Richtung) wird durch die Auskraglänge des Verformungselements bzw. des Grundkörpers des erfindungsgemäßen Führungsschuhs unterbunden.

Zwischen dem Befestigungsbereich und den jeweiligen Endbereichen des Verformungselements sind erfindungsgemäß zwei Mittenbereiche des Verformungselements vorgesehen, welche eine Torsion um eine zur Hochachse der Spritzgussmaschine parallele Torsions-Achse zulassen und so eine Soll-Torsionszone ausbilden, in der Verformungen um eine Torsionsachse T aufgefangen werden. Hierzu ist das Verformungselement relativ zum Grundkörper torsionsweicher (um die Torsionsachse T) ausgebildet. Dabei können die Mittenbereiche aus brückenbogenartigen Stegen ausgebildet sein, welche den Befestigungsbereich mit dem Endbereich verbinden. Die Mittenbereiche können aber auch als durchgehende Wand ausgestaltet sein, welche bevorzugt die gesamte Höhe zwischen dem Befestigungsbereich und dem Endbereich einnimmt. Weiter bevorzugt ist eine Gestaltung der Mittenbereiche, bei der brückenbogenartige Stege im oberen Bereich des jeweiligen Mittenbereichs den Befestigungsbereich mit dem jeweiligen Endbereich verbinden. Zwischenwände können die brückenartigen Stege nach unten in Richtung zum Grundkörper anbinden. Je nach Gestaltungserfordernis oder auch Zugänglichkeitserfordernis an die bewegliche Formaufspannplatte können in den Mittenbereichen bzw. in den Zwischenwänden Durchbrüche vorgesehen sein, welche die Torsionselastizität mitbestimmen und/oder andere Bauteile an der beweglichen Formaufspannplatte zugänglich machen.

Das plattenförmige Verformungselement seinerseits ist im unteren Bereich über einen Verbindungsbereich mit dem Grundkörper des erfindungsgemäßen Führungsschuhs verbunden, wobei der Verbindungsbereich z.B. durch eine Ausdünnung der Wandstärke oder durch Durchbrüche im Vergleich zum Verformungselement biegeweicher ausgebildet ist. Durch die relativ biegeweiche Anbindung des Verformungselements kann das plattenförmige Verformungselement um die Biegeachse B gebogen werden, ohne dass unzulässig hohe Kräfte oder Drehmomente um eine zur X-Achse parallele Achse auf die Führungsschiene übertragen werden.

Im Allgemeinen lässt sich sagen, dass mit dem erfindungsgemäßen Führungsschuh Verformungen aufgrund von Torsion im Verformungselement, insbesondere in den Mittelbereichen, ausgeglichen werden und Verformungen aufgrund von Biegungen im Verbindungsbereich zwischen Verformungselement und Grundkörper ausgeglichen werden.

Mit der Verbiegbarkeit des Verformungselementes im Verbindungsbereich um eine zur X-Achse parallele Achse ist auch ein geringfügiger Versatz der beiden Formhälften während des Schließvorganges des Formwerkzeuges mit dem Verformungselement des erfindungsgemäßen Führungsschuhs ausgleichbar. Dadurch werden nicht nur die Zentriervorrichtungen des Formwerkzeuges entlastet, sondern vor allem auch horizontale Kräfte von den Führungsschienen der Kunststoffverarbeitungsmaschine ferngehalten, was zu einer höheren Standfestigkeit der an der Führung der beweglichen Formaufspannplatte in X-Richtung beteiligten Vorrichtungen führt.

Bei geschlossenem Spritzgusswerkzeug wird durch Einbringen des Kunststoffmaterials mit Spritzgussdruck das Formwerkzeug verformt, wodurch die beiden Formaufspannplatten in geringem Umfang ballig verformt werden. Bei dieser balligen Verformung werden auch die Enden der beweglichen Werkzeugaufspannplatte verformt, was bei einer starren Anbindung des Grundkörpers an die bewegliche Werkzeugaufspannplatte auf die Gleit-/ Wälzelemente und somit auf die Führungsschiene übertragen werden würde. Dies führt zu Beschädigungen an der Führungseinrichtung für die bewegliche Formaufspannplatte, falls diese nicht entsprechend robust ausgelegt sind. Eine derart robuste meist massive Auslegung der an der Führung der beweglichen Aufspannplatte beteiligten Elemente hat aber meist große bewegte Massen zur Folge, die mit groß ausgelegten Antrieben beschleunigt bzw. abgebremst werden müssen, will man eine Zykluszeitverlängerung vermeiden.

Erfindungsgemäß werden die unteren Ecken der beweglichen Formaufspannplatte mittels des erfindungsgemäßen Führungsschuhs biege- und torsionselastisch aufgenommen, wodurch sich die auftretende Verformung der beweglichen Formaufspannplatte bei Beaufschlagung mit Spritzdruck nicht oder nur unwesentlich auf den Grundkörper auswirkt. Die Verformung der beweglichen Formaufspannplatte, insbesondere der unteren Ecken der beweglichen Aufspannplatte, wird dabei in das Verformungselement des erfindungsgemäßen Führungsschuhs eingeleitet, wodurch sich das Verformungselement um den Verbindungsbereich zwischen dem Grundkörper nach innen oder nach außen in Y-Richtung der Spritzgussmaschine verbiegt. Zudem werden die Mittenbereiche des Verformungselements um eine Hochachse (Z-Achse) tordieren. Das Verformungselement wird also bei Verformung der beweglichen Formaufspannplatte ebenfalls verformt, und zwar in dem Maße in dem die Ecken der beweglichen Aufspannplatte durch die Verformung der Platte bewegt bzw. in ihrer Lage verändert werden. Der horizontale und vertikale Abstand der Ecken der Aufspannplatte nimmt bei einer balligen Verformung der Platte ab, wobei die Ecken gleichzeitig eine Verdrehung erfahren. Abweichend vom bekannten Stand der Technik soll also erfindungsgemäß eine Verformung der beweglichen Formaufspannplatte zugelassen werden, wobei die Verformung von dem Verformungselement des Führungsschuhs aufgenommen wird und nicht über den Grundkörper auf die Gleit-/ Wälzelemente und somit nicht auf die Führungsbahnen übertragen wird.

Diese Auslenkungen und Verformungen der Ecken bei Verformung der beweglichen Werkzeugaufspannplatte kann vom erfindungsgemäßen Führungsschuh kompensiert werden, in dem dieser die Bewegungen in Y-Richtung und die Verdrehung um die Hochachse nachvollzieht, wobei der Führungsschuh in Teilbereichen selbst verformt wird und damit die Verformung der beweglichen Aufspannplatte kompensiert. Jedoch werden erfindungsgemäß die Aufnahmebereiche für die Gleit- bzw. Wälzelemente nicht oder nur unwesentlich verformt, wodurch die Belastungen der Gleit-/ Wälzelemente und die Führungsschienen auf ein tolerierbares Maß reduziert werden und Überlastungen vermieden werden. Gleichzeitig bleibt die Steifigkeit des Führungsschuhs gegen Kippen um die Y-Achse durch die steife Verbindung der Endbereiche des Verformungselements und des Grundkörpers erhalten. Gerade die Verformbarkeit des Verformungselements des erfindungsgemäßen Führungsschuhs ermöglicht somit eine Entkoppelung der mechanischen Verformungen der beweglichen Formaufspannplatte gegenüber der Führungsschiene der Spritzgussmaschine. Die geometrische Verformung der Formaufspannplatte wird also bereits durch den erfindungsgemäßen Führungsschuh kompensiert und muss nicht, wie im Stand der Technik üblich, von den Gleitelementen und den Führungsbahnen aufgefangen bzw. abgestützt werden.

Mit Aufbringen der Schließkraft und von Spritzgussdruck auf die beiden Formhälften des Spritzgusswerkzeuges werden, wie hinlänglich bekannt, die beiden Formaufspannplatten unweigerlich verformt, wobei es zu Verformungen der Ecken der Formaufspannplatten im Zehntelmillimeterbereich kommt, was ausreichend ist, um bei herkömmlichen Führungsschuhen bereits nach wenigen Zyklen Beschädigungen an den Gleit-/ Wälzelementen hervorzurufen.

Durch die erfindungsgemäße Vorrichtung werden solche Beschädigung vermieden, indem die Verformungen der Ecken der beweglichen Aufspannplatte innerhalb des Führungsschuhes abgebaut werden.

Herkömmliche Ausgleichsvorrichtungen, wie z.B. die in DE 41 41 259 A1 beschriebene, können Verformungen nur durch translatorische Verschiebungen der beweglichen Aufspannplatte auf dem Maschinenschlitten ausgleichen, womit immer ein Biegemoment verbleibt, welches von dem Führungsschuh auf die Gleitelemente und von dort auf die Führungsschiene übertragen wird.

Das erfindungsgemäße Verformungselement kann nicht nur translatorische Verschiebungen der beweglichen Aufspannplatte in Maschinenquerachse oder Maschinenhochachse kompensieren, sondern auch durch Torsion und Biegung hervorgerufene Verformungen aufnehmen und von den Gleit-/ Wälzelementen und der Führungsbahnen weitgehend fernhalten. Das jeweilige Verformungselement eines erfindungsgemäßen Führungsschuhs kann die Bewegung der jeweiligen unteren Ecke der beweglichen Formaufspannplatte nachvollziehen und dadurch Verspannungen innerhalb des Verformungselements aufnehmen und abbauen.

Da die Verformungen innerhalb des Verformungselements und des Verbindungsbereiches abgebaut werden, ist der Grundkörper des erfindungsgemäßen Führungsschuhs nahezu vollständig von den Verformungen entkoppelt, wodurch eine lange Lebensdauer der Gleit-/ Wälzelemente und der Führungsbahnen erreicht wird. Es ist somit gewährleistet, dass sowohl während den Verfahrbewegungen, als auch beim Schließen des Formwerkzeuges, der Führungsschuh gemäß der Erfindung eine optimale Plattenparallelität gewährleistet.

Je nach Belastung, d.h. Größe der beweglichen Formaufspannplatte bzw. der daran befestigten Formhälfte kann das erfindungsgemäße Verformungselement zusätzlich mit einer oder mehreren Versteifungsrippen versehen werden. Solche Versteifungsrippen sind vorzugsweise parallel zum Grundkörper ausgebildet und springen gegenüber dem plattenförmigen Verformungselement in Querrichtung der Maschine vor. Eine derartige bei normaler Verwendung des erfindungsgemäßen Führungsschuhs in etwa waagrechte Versteifungsrippe liegt dann im Zugfaserbereich des erfindungsgemäßen Führungsschuhs für die Abstützung von Kräften, welche aus einem Beschleunigen oder Abbremsen der beweglichen Formaufspannplatte resultieren.

Vorzugsweise wird eine derartige Versteifungsrippe, welche das Verformungselement ausreichend steif zur Aufnahme der Gewichtskraft der Formaufspannplatte und des Werkzeuges macht, im grundkörpernahen Bereich des Verformungselements angeordnet, d.h. in Verwendungslage unten am Verformungselement, jedoch oberhalb des Verbindungsbereiches. Eine solche Versteifungsrippe erstreckt sich in Längsrichtung vorzugsweise zumindest über den gesamten Mittenbereich des Verformungselements, bevorzugt bis in die Endbereiche des Verformungselements.

Ist eine derartige Versteifungsrippe vorgesehen, befindet sich oberhalb der Versteifungsrippe der torsionsweiche Bereich, und unterhalb der Verbindungsrippe der biegeweiche Bereich des Verformungselementes bzw. des erfindungsgemäßen Führungsschuhs. Somit kann eine derartige Versteifungsrippe auch als Trennelement zwischen Torsionsbereich und Biegebereich angesehen werden. Der torsionsweiche Bereich wird dann durch den Befestigungsbereich und den Mittenbereichen des Verformungselementes gebildet.

Bevorzugt wird man das Verformungselement zusammen mit dem biegeweichen Verbindungsbereich und den Grundkörper einstückig ausbilden, wobei Bereiche zwischen den Endbereichen des Verformungselementes, d.h. im Mittelbereich des Verformungselements, Durchbrüche aufweisen können. Solche Durchbrüche können zum Auslegen der Torsionssteifigkeit bzw. der Biegesteifigkeit des Verformungselementes in unterschiedliche Bereiche gelegt werden.

Erfindungsgemäß werden also im Wesentlichen nur die Mittelbereiche des Verformungselementes verformt, wobei der Befestigungsbereich des Verformungselements mit der beweglichen Formaufspannplatte bevorzugt biege- und torsionssteif ist.

Zur sicheren Aufnahme der vertikalen (Gewichts-) Kräfte kann das erfindungsgemäße Verformungselement beispielsweise brückenbogenartig ausgebildet sein, wobei Stege die beiden Endbereiche des Verformungselementes verbinden und den Befestigungsbereich aufnehmen. Die beiden Endbereiche des Verformungselementes stehen dann ähnlich wie Brückenpfeiler in Verwendungslage des erfindungsgemäßen Führungsschuhs nach oben vom Grundkörper ab. Auf der Unterseite des Grundkörpers des erfindungsgemäßen Führungsschuhs sind üblicherweise die Gleitelemente bzw. Wälzelemente befestigt, welche auf den Führungsschienen der Maschine reibungsreduziert laufen können.

In einem bevorzugten Ausführungsbeispiel ist der Befestigungbereich für die übliche Formaufspannplatte in Längsrichtung des erfindungsgemäßen Führungsschuhs in etwa mittig angeordnet, damit Beschleunigungs- und Verzögerungskräfte, die beim Öffnen und Schließen der Form auftreten, symmetrisch aufgenommen werden können. Jedoch kann, vorzugsweise bei großen Formwerkzeugen, d.h. bei hohen Beschleunigungs- bzw. Verzögerungskräften, der Befestigungsbereich für die bewegliche Aufspannplatte nach hinten, d.h. von der festen Werkzeugaufspannplatte weg, verlegt werden. Vorzugsweise wird man eine solche asymmetrische Lösung einsetzen, wenn Antriebsmittel zum Verfahren der beweglichen Aufspannplatte angebracht sind, die die Kräfte in X-Richtung beim Beschleunigen/Verzögern der Bewegung der beweglichen Aufspannplatte aufnehmen können. Beispielsweise steht so für die Aufnahme von Kippmomenten des beweglichen Formwerkzeuges in Richtung des festen Werkzeuges ein größerer Hebel zur Verfügung. Eine asymmetrische Ausbildung des erfindungsgemäßen Führungsschuhs in Längsrichtung der Spritzgussmaschine kann aber auch konstruktiv bedingt sein.

Für die Verwirklichung des Erfindungsgedankens ist im Übergangsbereich von der in etwa waagerechten Oberseite des Grundkörpers zum in etwa senkrechten, plattenförmigen Verformungsselement ein Verbindungsbereich vorgesehen, der ein Verbiegen des elastischen Verformungselements um eine Achse parallel zur Maschinenlängsachse (X-Achse) ermöglicht. Dieser Verbindungsbereich, welcher ebenfalls elastisch ausgebildet ist, kann dabei als Vollmaterial zwischen den jeweiligen Endbereichen des Grundkörpers und des Verformungselementes angeordnet sein.

Vorzugsweise, als Mittel der Einstellbarkeit der Elastizität der Verbiegung des erfindungsgemäßen Führungsschuhs, können in diesem Verbindungsbereich Durchbrüche vorgesehen werden, welche konstruktiv auf die erwarteten Belastungen durch Verformung der beweglichen Werkzeugaufspannplatte angepasst werden können. Vorzugsweise wird der Verbiegungsbereich, d.h. der Verbindungsbereich zwischen Grundkörper und Verformungselement, nach oben durch die oben bereits angesprochene Versteifungsrippe, welche waagrecht von dem elastischen Verformungselement vorspringt, begrenzt.

Bei der einstückigen Ausgestaltung des erfindungsgemäßen Führungsschuhs kann ein derartiger Führungsschuh beispielsweise aus Kugelgrafitguss (GGG) hergestellt werden. Zur Erfüllung des Erfindungsgedankens ist jedoch auch eine zwei- oder mehrteilige Gestaltung des erfindungsgemäßen Führungsschuhs denkbar, wobei die einzelnen Komponenten miteinander verschraubt oder auch verschweißt werden können. Vorzugsweise wird man, wenn man große unterschiedliche Materialeigenschaften zwischen den einzelnen Bereichen des erfindungsgemäßen Führungsschuhs erwartet, verschiedene Materialien einsetzen.

Gemäß einer weiteren bevorzugten Ausführungsform kann der erfindungsgemäße Führungsschuh auch mehrteilig als montierter Führungsschuh ausgebildet sein, bei dem einzelne Bestandteile, beispielsweise der Grundkörper, das Verformungselement usw. mittels kraft- und/oder formschlüssigen Verbindungstechniken, beispielsweise mittels Schrauben oder durch Verstiftungen zusammengebaut sind. Wesentlich ist, dass keine gelenkartigen Vorrichtungen vorgesehen sind, um Ausgleichsbewegungen zu vollführen. Beim erfindungsgemäßen Führungsschuh werden sämtliche auftretenden Verformungen elastisch in den eigens dafür vorgesehenen und dafür ausgebildeten Sollbiegezonen und/oder Torsionsbiegezonen aufgefangen.

Wesentlich für die Erfüllung des Erfindungsgedankens ist jedoch, dass Verformungen, die in der beweglichen Werkzeugaufspannplatte entstehen können, durch das Verformungselement, d.h. einen verformbaren Bereich des Führungsschuhs aufgenommen werden können, und Spannungen und Verformungen nicht auf den Grundkörper übertragen werden, was zu einer Weiterleitung der Kräfte bzw. Verformungen auf Gleitelemente bzw. auf die Führungsschiene zur Folge hätte.

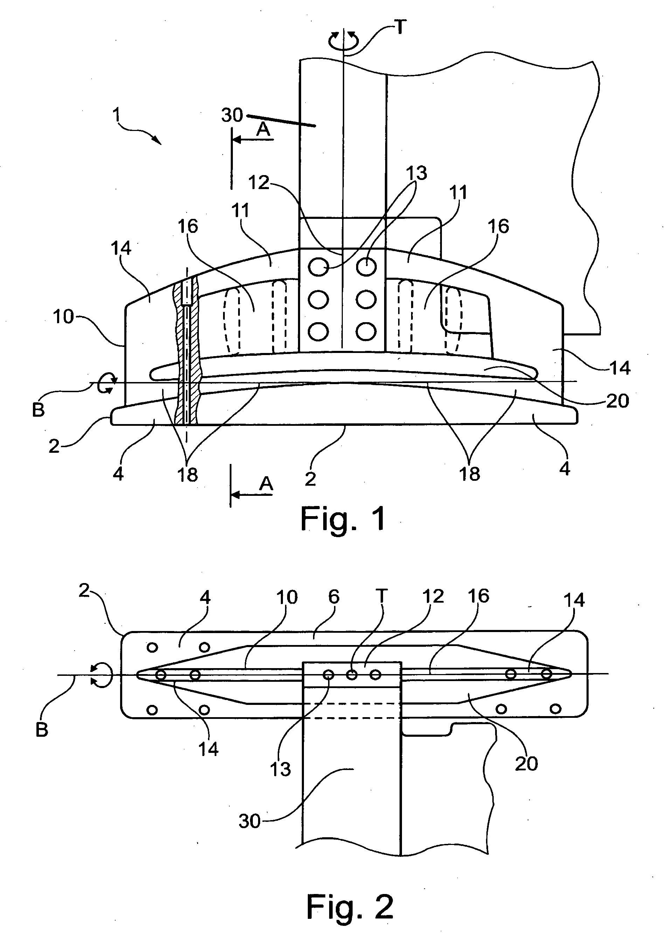

Im Nachfolgenden wird beispielhaft eine bevorzugte Ausführungsform stellvertretend für weitere Ausführungsformen detailliert beschrieben, wobei die Figuren 1 bis 5 den erfindungsgemäßen Führungsschuh in verschiedenen Ansichten mit verschiedenen Details darstellen. Gleiche Elemente tragen dabei dieselben Bezugszeichen. Es zeigen:
- Figur 1:: schematisch einen erfindungsgemäßen Führungsschuh in der Seitenansicht;
- Figur 2:: schematisch einen erfindungsgemäßen Führungsschuh in der Draufsicht von oben;
- Figur 3:: schematisch einen erfindungsgemäßen Führungsschuh in 3-dimensionaler Darstellung;
- Figur 4:: schematisch einen Vertikalschnitt durch einen erfindungsgemäßen Führungsschuh gemäß Figur 1.
- Figur 5:: schematisch einen erfindungsgemäßen Führungsschuh in der Draufsicht im verformten Zustand;

Figur 1 zeigt in einer Seitenansicht einen erfindungsgemäßen Führungsschuh 1, wobei die Längsausdehnung der Längsrichtung (X-Richtung) einer Spritzgießmaschine entspricht. Der in Figur 1 dargestellte Führungsschuh weist einen Grundkörper 2 auf, der sich in Verwendungslage des Führungsschuhs 1 im unteren Bereich des Führungsschuhs 1 befindet und auf dem in Vertikalrichtung nach oben abgehend ein Verformungselement 10 angeordnet ist, welches über Endbereiche 14 mit Endbereichen 4 des Grundkörpers 2 verbunden ist. Exemplarisch sind in den Endbereichen 4 des Grundkörpers Befestigungsbohrungen 5 für Gleit-/ Wälzelemente (nicht gezeigt) dargestellt. Zwischen den Endbereichen 4 des Grundkörpers 2 befindet sich der Mittenbereich 6 des Grundkörpers 2, welcher über einen Verbindungsbereich 18 mit Mittenbereichen 16 des Verformungselementes 10 verbunden ist. Der Verbindungsbereich 18 ist als Soll-Biegezone für eine Biegung des Verformungselements um eine Biegeachse B ausgebildet. Zwischen den beiden Mittenbereichen 16 des Verformungselementes 10 ist ein Befestigungsbereich 12 für die Befestigung des Führungsschuhs an eine bewegliche Werkzeugaufspannplatte 30 angeordnet. Die beiden Mittelbereiche 16 des elastisch verformbaren Verformungselementes 10 können dabei mit brückenbogenartigen Stegen 11 überspannt sein, welche den Befestigungsbereich 12 mit den Endbereiche 14 verbinden. Unterhalb des Befestigungsbereiches 12 ist in dem Ausführungsbeispiel gemäß Figur 1 eine Versteifungsrippe 20 angeordnet, welche sich in Längsrichtung parallel zu dem Grundkörper 2 erstreckt. Eine Biegeachse B, um die sich das Verformungselement 10 gegenüber dem Grundkörper 2 biegen kann, verläuft in etwa waagrecht durch einen Verbindungsbereich 18.

Figur 2 zeigt von oben die in Figur 1 ebenfalls dargestellte optionale Versteifungsrippe 20, wodurch erkennbar ist, dass die Versteifungsrippe 20 in etwa senkrecht in Querrichtung (Y-Richtung) der Spritzgießmaschine von dem Verformungselement 10 vorspringt. Figur 2 zeigt ferner im Befestigungsbereich 12 einen Vorschlag für eine Befestigung der beweglichen Aufspannplatte 30.

Unterhalb der Versteifungsrippe 20, welche in etwa flächenparallel zum Grundkörper 2 angeordnet ist, schließt sich ausgehend von den beiden Endbereichen 14 ein biegeelastischer Verbindungsbereich 18 unterhalb der Mittelbereiche 16 bzw. des Befestigungsbereiches 12 an. Der biegeelastische Verbindungsbereich 18 besitzt eine reduzierte Wandstärke oder weist Durchbrüche auf. Hierdurch wird erreicht, dass der Verbindungsbereich 18 relativ zum Verformungselement 10 biegeweicher ausgebildet ist. Derartige Durchbrüche sind in Figur 1 mit der gestrichelten Linie im Verbindungsbereich 18 angedeutet. Die Biegeachse B, welche im Verbindungsbereich 18 angeordnet ist, verläuft gemäß Figur 2 parallel zur X-Achse.

Ebenso wie der Verbindungsbereich 18 können auch die Mittelbereiche 16 des elastischen Verformungselementes 10 ausgedünnte Bereiche unterhalb der brückenartigen Stege 11 besitzen. Aber auch Durchbrüche in den Mittelbereichen 16 sind zum Erzielen einer bestimmten gewünschten Torsionsweichheit um die Torsionsachse T machbar. Solche Durchbrüche sind in Figur 1 durch gestrichelte Linien dargestellt. Die Torsionsachse T ist als senkrechte in etwa zur Z-Achse parallele Linie dargestellt.

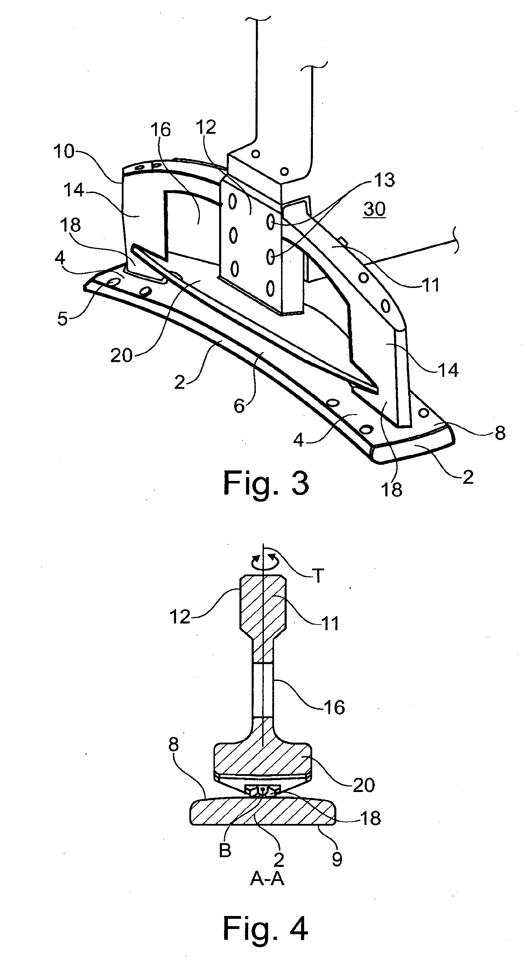

In Figur 3 ist die bevorzugte Ausführungsform der Figuren 1 und 2 in einer isometrischen Darstellung schematisch gezeigt, wobei auch hier gleiche Elemente bzw. Bereiche dieselben Bezugsziffern tragen.

Im Unterschied zu dem Ausführungsbeispiel gemäß Figur 1 zeigt das Ausführungsbeispiel gemäß Figur 3 im Mittelbereich 16 des Verformungselementes 10 unterhalb der brückenbogenartigen Verbindungsstege 11 zwischen den Endbereichen 14 und dem Befestigungsbereich 12 einen Durchbruch. Die brückenbogenartigen Verbindungsstege bilden zusammen mit den beiden Endbereichen und dem Befestigungsbereich somit das brückenbogenartige Verformungselement 10. Wie bereits oben angedeutet, ist aus Figur 3 gut die optionale Versteifungsrippe 20 erkennbar, wobei auch deren Funktion, der Begrenzung des Torsionsbereichs des Verformungselementes, in Richtung des Grundkörpers verdeutlicht wird.

In Figur 4 ist zur weiteren Verdeutlichung des erfindungsgemäßen Führungsschuhs ein Vertikalschnitt durch den Führungsschuh gemäß Figur 1 gezeigt, wobei der Schnittverlauf durch einen Mittelbereich 16 des Verformungsbereiches 10 verläuft. Deutlich sichtbar ist in dem Schnitt gemäß Figur 4 die Ausgestaltung der stegartigen Brückenbogenelemente 11 zwischen den Endbereichen 14 und dem Befestigungsbereich 12 des Verformungselementes 10. Die Torsionsachse T wurde zur besseren Darstellbarkeit in die Schnittebene verlegt und verläuft in etwa senkrecht. Die Biegeachse ist als Punkt B im Verbindungsbereich 18 erkennbar.

Weiter ist im Bereich zwischen der Versteifungsrippe 20 und den stegartigen Brückenelementen 11 ein Durchbruch im Mittelbereich 16 erkennbar. Weiterhin gut erkennbar ist in der Schnittdarstellung gemäß Figur 4 der biegeelastische Verbindungsbereich 18 des Verformungselementes 10 zum Grundkörper 2. Gleichzeitig ist in Figur 4 eine Oberseite 8 des Grundkörpers 2 angegeben, welche zum Verformungselement 10 weist. Die der Oberseite 8 gegenüberliegende Unterseite 9 des Grundkörpers 12 dient der Aufnahme von Gleit-/ Wälzelementen, welche nicht gezeigt.

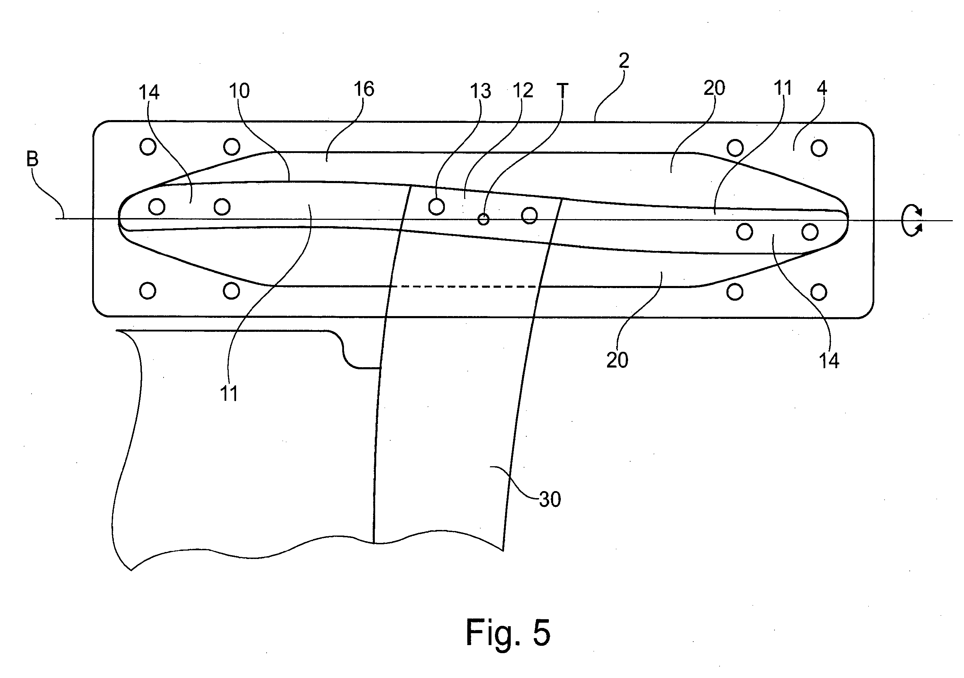

Der in den Figuren 1 bis 4 dargestellte unverformte Führungsschuh 1 ist in Figur 5 im deformierten Zustand, d.h. in zur Maschinenmitte hin gebogenem und in einem um die Torsionsachse T tordierten Zustand gezeigt. Zur besseren Orientierung und zur Verdeutlichung des deformierten Zustandes zeigt Figur 5 einen Teil einer deformierten beweglichen Formaufspannplatte 30 übertrieben dargestellt.

Die Formaufspannplatte 30 weist dabei eine von der festen Werkzeugaufspannplatte weg, weisende konvexe Verformung auf, welche eine 3-dimensionale Verschiebung der jeweiligen unteren Ecke der beweglichen Aufspannplatte zur Folge hat. Eine derartige ballige bzw. konvexe Verformung der beweglichen Formaufspannplatte 30 wird durch das elastische Verformungselement 10 des erfindungsgemäßen Führungsschuhs 1 kompensiert bzw. absorbiert. Dies erfolgt indem, wie in Figur 5 dargestellt, die brückenartigen Stege 11 bzw. die Mittelbereiche 16 des Verformungselementes gegenläufig ausgebeult werden und die in der Figur 5 gezeigte s-förmige Gestalt des Verformungselementes 10 ausbilden. Gleichzeitig wird das Verformungselement 10 um die Biegeachse B, welche durch den Verbindungsbereich 18 führt zur Seite gebogen.

Wie erfindungsgemäß weiter in Figur 5 dargestellt ist, überträgt sich bei der Verformung des Verformungselements 10 mit seinen Mittelbereichen 16 und der Versteifungsrippe 20 keine oder nahezu keine Verformung bzw. Verbiegung auf den Grundkörper 2.

Da die ballige Verformung der beweglichen Formaufspannplatte 30 erst bei Aufbringen der Schließkraft und des Spritzdrucks entsteht und der erfindungsgemäße Führungsschuh 1 in Längsrichtung steif ausgebildet ist, erfüllt der erfindungsgemäße Führungsschuh alle an ihn gestellten Anforderungen hinsichtlich einer guten Parallelführung der beweglichen Werkzeugaufspannplatte 30 im Bezug auf die feste Werkzeugaufspannplatte und auch eine gute Parallelität der beiden Werkzeugaufspannplatten während des Formschließvorgangs.

### Bezugszeichenliste

- 1: Führungsschuh
- 2: Grundkörper
- 4: Endbereiche Grundkörper
- 5: Befestigungslöcher für Führungselemente
- 6: Mittenbereich Grundkörper
- 8: Oberseite Grundkörper
- 9: Unterseite Grundkörper
- 10: Verformungselement
- 11: brückenartige Stege
- 12: Befestigungsbereich für bewegliche Formaufspannplatte
- 13: Befestigungslöcher für bewegliche Formaufspannplatte
- 14: Endbereiche Verformungselement
- 16: Mittenbereiche
- 18: biegeelastischer Verbindungsbereich
- 20: Versteifungsrippe
- 30: bewegliche Formaufspannplatte

- B: Biegeachse
- T: Torsionsachse

## Patentansprüche

1. Führungsschuh (1) einer Führungsvorrichtung einer Schließeinheit einer kunststoffverarbeitenden Maschine zur Abstützung und Führung einer beweglichen Formaufspannplatte (30) in einer Schließrichtung der kunststoffverarbeitenden Maschine, wobei der Führungsschuh (1) einen Grundkörper (2) aufweist, an dem Gleit- und/oder Wälzelemente befestigbar sind, und ein vom Grundkörper (2) beabstandetes und im Wesentlichen senkrecht in einer Schließrichtung (x-Richtung) verlaufendes Anbindungselement (10) aufweist, welches einen Befestigungsbereich (12) zur Befestigung des Führungsschuhs (1) an einer beweglichen Formaufspannplatte (30) aufweist, wobei das Anbindungselement (10) als Verformungselement (10) ausgebildet ist und das Verformungselement (10) über einen Verbindungsbereich (18) am Grundkörper (2) angebunden ist, der eine Soll-Biegezone hinsichtlich einer Biegung um eine zur Schließrichtung im Wesentlichen parallelen Biegeachse (B) ausbildet und das Verformungselement (10) weiter eine Soll-Torsionszone um eine im Wesentlichen senkrecht zur Schließrichtung angeordnete Torsionsachse (T) ausbildet,
**dadurch gekennzeichnet, dass**
- die bewegliche Formaufspannplatte (30) entkoppelt vom Grundkörper (2) ausschließlich am Befestigungsbereich (12) des Anbindungselements (10) befestigbar ist und der Grundkörper (2) in Schließrichtung langgestreckt ist.

2. Führungsschuh (1) nach Anspruch 1, **dadurch gekennzeichnet, dass** Verformungselement (10) rippenartig bzw. wangenartig ausgebildet ist.

3. Führungsschuh (1) nach Anspruch 1 oder 2, **dadurch gekennzeichnet, dass** der Befestigungsbereich (12) in Längsrichtung des Führungsschuhs (1), insbesondere in Längsrichtung bevorzugt in etwa mittig am Anbindungselement angeordnet ist.

4. Führungsschuh (1) nach einem der vorigen Ansprüche, **dadurch gekennzeichnet, dass** der Verbindungsbereich (18) zur biegeweicheren Ausgestaltung zumindest einen Durchbruch aufweist oder zumindest abschnittsweise mit verdünnter Wandstärke ausgebildet ist.

5. Führungsschuh (1) nach einem der vorigen Ansprüche, **dadurch gekennzeichnet, dass** an dem Verformungselement (10) in Längsrichtung des Grundkörpers (2) zumindest eine Versteifungsrippe (20) vorgesehen ist, die in bestimmungsgemäßer Verwendungslage des Führungsschuhs (1) waagrecht auf beiden Seiten des Verformungselements (10) vorspringt.

6. Führungsschuh (1) nach einem der vorigen Ansprüche, **dadurch gekennzeichnet, dass** zur torsionsweicheren Ausgestaltung des Verformungselements (10) Mittenbereiche (16), die in Längsrichtung des Anbindungselements (10) benachbart zum Befestigungsbereich (12) angeordnet sind, von brückenbogenartigen Stegen (11) überspannt werden, die die Endbereiche (14) des Verformungselements (10) mit dem Befestigungsbereich (12) des Verformungselements (10) verbinden.

7. Führungsschuh (1) nach Anspruch 6, **dadurch gekennzeichnet, dass** zur torsionsweicheren Ausgestaltung des Verformungselements (10) die Mittenbereiche (16) eine niedrigere Wandstärke aufweisen als die brückenbogenartigen Stege (11).

8. Führungsschuh (1) nach einem der vorigen Ansprüche, dass die Mittenbereiche (16) Durchbrüche aufweisen.

9. Führungsschuh (1) nach einem der vorigen Ansprüche, **dadurch gekennzeichnet, dass** der Führungsschuh (1) einstückig als Gussteil, Schmiedeteil oder Schweißkonstruktion ausgebildet ist oder mehrstückig als fest verbundene Komponenten mittels Kraft-/ Formschluss (also z.B. verschraubte Teile) ohne gelenkige Verbindungen ausgebildet ist.

10. Führungsvorrichtung einer Schließeinheit einer kunststoffverarbeitenden Maschine mit zumindest einem Führungsschuh (1) nach einem der Ansprüche 1 bis 10.

11. Kunststoffverarbeitende Maschine mit zumindest einer Führungsvorrichtung nach Anspruch 11.

## Claims

1. A guide shoe (1) of a guiding device of a plastic processing machine clamping unit for supporting and guiding a movable mould platen (30) in a clamping direction of the plastic processing machine, wherein the guide shoe (1) has a main body (2) on which sliding and/or rolling elements can be fastened, and a connecting element (10) which is spaced apart from the main body (2), and which runs substantially perpendicularly in a clamping direction (x-direction), which has a fastening region (12) for fastening the guide shoe (1) to a movable mould platen (30), wherein the connecting element (10) is designed as a deformation element (10) and the deformation element (10) is connected to the main body (2) via a connecting region (18) that forms a target bending zone with respect to a bend about a bending axis (B), which is substantially parallel to the clamping direction, and the deformation element (10) additionally forms a target torsion zone about a torsion axis (T), which is arranged substantially perpendicular to the clamping direction,
**characterized in that**
- the movable mould platen (30) can be fastened solely to the fastening region (12) of the connecting element (10) in a decoupled manner from the main body (2),
and the main body (2) is elongated in the clamping direction.

2. The guide shoe (1) according to claim 1, **characterized in that** the deformation element (10) is constructed in a rib-like or respectively flange-like manner.

3. The guide shoe (1) according to claim 1 or 2, **characterized in that** the fastening region (12) is arranged in longitudinal direction of the guide shoe (1), in particular in longitudinal direction preferably approximately centrally on the connecting element.

4. The guide shoe (1) according to one of the preceding claims, **characterized in that** the connecting region (18) for a more bending-flexible configuration has at least one aperture or is constructed at least partially with a thinned wall thickness.

5. The guide shoe (1) according to one of the preceding claims, **characterized in that** at least one reinforcing rib (20) is provided on the deformation element (10) in longitudinal direction of the main body (2), which reinforcing rib in intended position of use of the guide shoe (1) projects horizontally on both sides of the deformation element (10).

6. The guide shoe (1) according to one of the preceding claims, **characterized in that** for a more torsionally flexible configuration of the deformation element (10), centre regions (16), which are arranged in longitudinal direction of the connecting element (10) adjacent to the fastening region (12), are spanned by webs (11) in the manner of bridge arches, which connect the end regions (14) of the deformation element (10) with the fastening region (12) of the deformation element (10).

7. The guide shoe (1) according to claim 6, **characterized in that** for a more torsionally flexible configuration of the deformation element (10), the centre regions (16) have a smaller wall thickness than the webs (11) in the manner of bridge arches.

8. The guide shoe (1) according to one of the preceding claims, **characterized in that** the centre regions (16) have apertures.

9. The guide shoe (1) according to one of the preceding claims, **characterized in that** the guide shoe (1) is constructed in one piece as a cast part, forged part or welded construction, or is constructed in several parts as fixedly connected components by means of form-/force-fitting (i.e. e.g. screwed parts) without articulated connections.

10. A guiding device of a clamping unit of a plastic processing machine with at least one guide shoe (1) according to one of claims 1 to 10.

11. A plastic processing machine with at least one guiding device according to claim 11.

## Revendications

1. Sabot de guidage (1) d'un dispositif de guidage d'une unité de verrouillage d'une machine de transformation de matières plastiques pour le soutien et le guidage d'une plaque de serrage de moule mobile (30) dans un sens de fermeture de la machine de transformation de matières plastiques, sachant que le sabot de guidage (1) présente un corps de base (2), sur lequel des éléments de glissière et/ou de rouleau peuvent être fixés, et un élément de liaison (10) distant du corps de base (2) et essentiellement vertical dans un sens de fermeture (sens x), lequel présente une partie de fixation (12) pour fixer le sabot de guidage (1) à une plaque de serrage de moule mobile (30), sachant que l'élément de liaison (10) est formé en tant qu'élément de déformation (10), et l'élément de déformation (10) est relié au corps de base (2) par une partie de liaison (18) qui forme une zone de flexion nominale par rapport à une flexion sur un axe de flexion (B) essentiellement parallèle au sens de fermeture, et l'élément de déformation (10) forme en outre une zone de torsion nominale sur un axe de torsion (T) essentiellement vertical au sens de fermeture,
**caractérisé en ce que**
- la plaque de serrage de moule mobile (30) peut être fixée exclusivement sur la partie de fixation (12) de l'élément de liaison (10) en étant découplée du corps de base (2),
et le corps de base (2) est étiré en longueur dans le sens de fermeture.

2. Sabot de guidage (1) selon la revendication 1, **caractérisé en ce que** l'élément de déformation (10) est conçu nervuré, respectivement, en forme de joue.

3. Sabot de guidage (1) selon la revendication 1 ou 2, **caractérisé en ce que** la partie de fixation (12) est disposée dans le sens longitudinal du sabot de guidage (1), en particulier dans le sens longitudinal de préférence environ centrée sur l'élément de liaison.

4. Sabot de guidage (1) selon l'une des revendications précédentes, **caractérisé en ce que** la partie de liaison (18) pour la conformation avec une souplesse de flexion, présente au moins une percée ou est formée au moins par tronçons avec une épaisseur de paroi réduite.

5. Sabot de guidage (1) selon l'une des revendications précédentes, **caractérisé en ce qu'**au moins une nervure de renfort (20) est prévue sur l'élément de liaison (10) dans le sens longitudinal du corps de base (2), laquelle fait saillie horizontalement sur les deux côtés de l'élément de déformation (10) dans une position d'utilisation conforme à l'usage prévu du sabot de guidage (1).

6. Sabot de guidage (1) selon l'une des revendications précédentes, **caractérisé en ce que** pour la conformation avec une souplesse de torsion de l'élément de déformation (10), des parties centrales (16) disposées dans le voisinage de la partie de fixation (12) dans le sens longitudinal de l'élément de liaison (10), sont couvertes par des traverses de type arche de pont (11), qui relient les parties d'extrémité (14) de l'élément de déformation (10) à la partie de fixation (12) de l'élément de déformation (10).

7. Sabot de guidage (1) selon la revendication 6, **caractérisé en ce que** pour la conformation avec une souplesse de torsion de l'élément de déformation (10), les parties centrales (16) présentent une épaisseur de paroi moindre que les traverses en arche de pont (11).

8. Sabot de guidage (1) selon l'une des revendications précédentes, **caractérisé en ce que** les parties centrales (16) présentent des percées.

9. Sabot de guidage (1) selon l'une des revendications précédentes, **caractérisé en ce que** le sabot de guidage (1) est formé en tant qu'une seule pièce fondue, forgée ou en tant que construction soudée ou en plusieurs pièces en tant que composants liés fixement par adhérence des forces / complémentarité de forme (également des pièces vissées par exemple) sans liaisons articulées.

10. Dispositif de guidage d'une unité de verrouillage d'une machine de transformation de matières plastiques comprenant au moins un sabot de guidage (1) selon l'une des revendications 1 à 10.

11. Machine de transformation de matières plastiques comprenant au moins un dispositif de guidage selon la revendication 11.
